# EUROPEAN PATENT APPLICATION

(11) **EP 1 930 184 A1**
(43) Date of publication of application: **11.06.2008**
(21) Application number: 07121124.7
(22) Date of filing: 20.11.2007
(51) Int. Cl.: B60C 1/00, B60C 15/06, C08L 7/00, C08L 9/00, C08L 9/06, C08L 21/00, C08L 61/04, C08L 61/28

(54) **Tire with apex containing in-situ resin and rubber with pendant hydroxyl groups**

(30) Priority: 21.11.2006 US 602569
(71) Applicant: THE GOODYEAR TIRE & RUBBER COMPANY, Akron, OH 44316-0001 (US)
(72) Inventor: Thielen, Georges Marcel Victor, L-4995, Schouweiler (LU)
(74) Representative: Kutsch, Bernd

(57) **Abstract**

The invention is directed to a pneumatic tier having an apex of a specific composition comprising a specified co-monomer and a specified methylene donor.

## Description

### Background of the Invention

A tire is a composite of several components each serving a specific and unique function yet all synergistically functioning to produce the desired performance. One important component is the carcass ply. The carcass ply is a continuous layer of rubber-coated parallel cords which extends from bead to bead and functions as a reinforcing element of the tire. The plies are turned up around the bead, thereby locking the bead into the assembly or carcass. The tire is assembled in the green (uncured) state and upon completion is then vulcanized. Typically an in-situ resin is included in an apex rubber composition to impart desirable properties to the rubber composition, including hardness, tear strength, and adhesion to reinforcement. Typically, methylene acceptor-methylene donor systems are used as in-situ resins. Performance and safety requirements place an ever increasing demand for improved apex rubber compounds. Therefore, there exists a continuing need for alternative compounding approaches to maintain or improve the properties of apex compounds.

The term "apex" as used herein refers to a component of a tire located in an area of the tire in the immediate proximity of the carcass ply turnup. The apex typically has the shape of a rubber wedge and is located in the lower sidewall region above the bead. Typically it is bonded to and at least partially encased by the carcass plies or the carcass ply turnup. The apex typically also includes at least apart of the area located between the lower sidewall rubber and the axially outer side of the carcass ply turnup.

### Brief Description of the Drawing

The invention will be described by way of example and with reference to the accompanying drawing in which the sole drawing is a partial cross-sectional view of a tire according to the present invention.

### Summary of the Invention

The present invention is directed to a pneumatic tire having an apex according to claim 1.

Dependent claims refer to preferred embodiments of the invention. Preferably, the apex according to the invention is located around a carcass ply turnup.

### Detailed Disclosure of the Invention

There is disclosed a pneumatic tire having the apex according to claim 1.

Pneumatic tire means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid that sustains the vehicle load. The present invention relates to both bias and radial-ply tires. Preferably, the present invention is a radial-ply tire. Radial-ply tire means a belted or circumferentially-restricted pneumatic tire in which the carcass ply cords which extend from bead to bead are laid at cord angles preferably between 65° and 90° with respect to the equatorial plane of the tire.

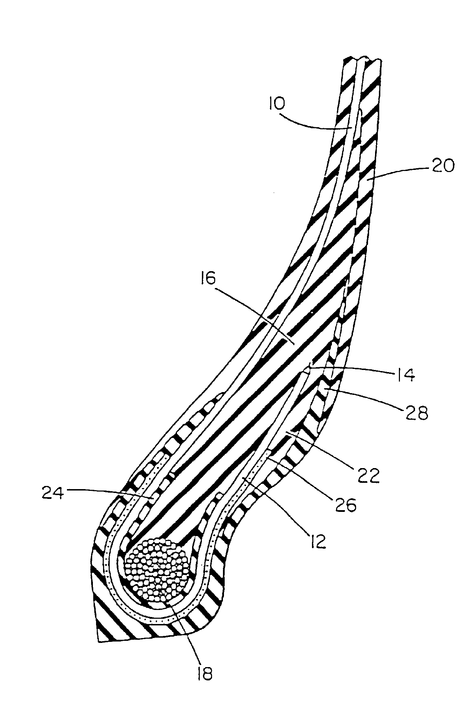

A preferred embodiment of this invention is shown in Fig. 1. The pneumatic tire preferably contains a single steel cord reinforced carcass ply 10 with a turnup portion 12 and a terminal end 14. Steel cord means one or more of the reinforcement elements, formed by one or more steel filaments/wires which may or may not be twisted or otherwise formed which may further include strands so formed which strands may or may not be also so formed, of which the carcass ply in the tire is comprised. The apex 16 is in the immediate proximity of the carcass ply turnup 14 including the area above the bead 18 and is encased by the carcass ply 10 and carcass ply turnup 12 or sidewall compound 20. The apex also includes the area 22 located between the lower sidewall 20 or a chafer 28 and the axially outer side of the carcass ply turnup 12. The interface between the bead 18 and the carcass ply 10 is a flipper 24. Located outside of the carcass ply 10 and extending in an essentially parallel relationship to the carcass ply 10 is a chipper 26. Located around the outside of the bead 18 is the chafer 28 to protect the carcass ply 12 from the rim (not shown), distribute flexing above the rim, and seal the tire.

In accordance with this invention, a rubber tire is provided having an apex 16, 22 in the region of the carcass ply turnup 12 wherein said rubber in said apex 16, 22 is the herein-described rubber composition.

In the description of this invention, the terms "rubber" and "elastomer" when used herein, are used interchangeably, unless otherwise prescribed. The terms "rubber composition", "compounded rubber" and "rubber compound", if used herein, are used interchangeably to refer to "rubber which has been blended or mixed with various ingredients and materials".

The term "phr" if used herein, and according to conventional practice, refers to "parts of a respective material per 100 parts by weight of rubber, or elastomer".

The Tg of an elastomer, if referred to herein, refers to a "glass transition temperature" of the elastomer which can conveniently be determined by a differential scanning calorimeter at a heating rate of 10°C per minute.

The apex rubber composition includes a copolymer rubber derived from the conjugated diene monomer, optionally a vinyl substituted aromatic monomer, and hydroxyl containing co-monomer.

Representative examples of conjugated diene monomers which may be used include 1,3-butadiene, isoprene, 1,3-ethylbutadiene, 1,3-pentadiene, 1,3-hexadiene, 1,3-cyclooctadiene, 1,3-octadiene and mixtures thereof. Preferably, the conjugated diene is 1,3-butadiene. The copolymer will contain repeat units derived from 10 to 99 weight percent of the conjugated diene. Preferably, from 50 to 80 weight percent of the copolymer will be derived from the conjugated diene.

The copolymer may additionally be derived from a vinyl substituted aromatic monomer. The vinyl-substituted aromatic compound may contain from 8 to 16 carbon atoms. Representative examples of vinyl substituted aromatic monomers are styrene, alpha methyl styrene, vinyl toluene, 3-methyl styrene, 4-methyl styrene, 4-cyclohexylstyrene, 4-para-tolylstyrene, para-chlorostyrene, 4-tert-butyl styrene, 1-vinylnaphthalene, 2-vinylnaphthalene and mixtures thereof. Preferably, styrene is used. The copolymer will contain repeat units derived from 0 to 70 weight percent of the vinyl substituted aromatic monomer. Preferably, 5 to 65, more preferably from 20 to 40 weight percent of the copolymer is derived from a vinyl substituted aromatic monomer.

The copolymer is further derived from a hydroxyl containing monomer. 1 to 20 weight percent of the copolymer is derived from the hydroxy containing monomers. Preferably, from 1 to 15 weight percent, alternately 1 to 5 weight percent, of the copolymer is derived from these monomers. The hydroxyl containing co-monomer may be a hydroxyl alkyl acrylate of formula I or a hydroxy alkyl acrylamide of formula II and/or III, as seen below. 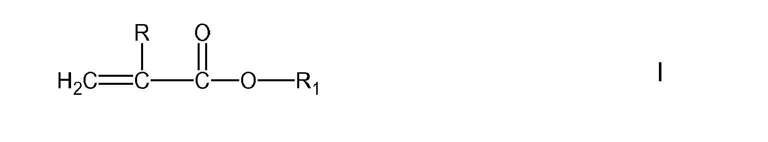 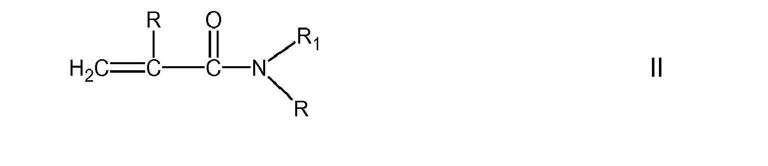 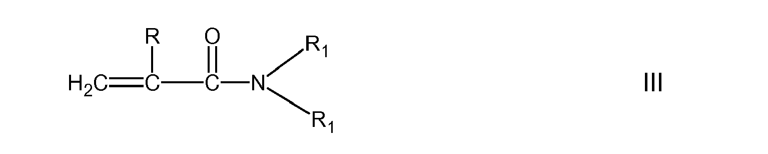 wherein R represents a hydrogen atom or an alkyl group containing from 1 to 8 carbon atoms. Preferably, R is a hydrogen atom or an alkyl group having from 1 to 4 carbon atoms. R₁ is a saturated alcohol group containing from 1 to 8 carbon atoms. Preferably, R₁ has from 1 to 4 carbon atoms. The saturated alcohol group may be a primary, secondary or tertiary alcohol group.

The hydroxy alkyl acrylate co-monomer of structural formula I may be hydroxymethyl methacrylate, 2-hydroxyethyl methacrylate, 2-hydroxypropyl methacrylate (HPMA isomer), 3-hydroxypropyl methacrylate (HPMA isomer), 3-phenoxy-2-hydroxypropyl methacrylate, hydroxybutyl methacrylate, hydroxyhexyl methacrylate, hydroxyoctyl methacrylate and mixtures thereof. Preferably the hydroxyalkyl acrylate co-monomer of structural formula I is hydroxymethyl methacrylate, 2-hydroxyethyl methacrylate, 2-hydroxypropyl methacrylate, 3-hydroxypropyl methacrylate and mixtures thereof.

When mixtures of such co-monomers are selected, the mixtures may comprise 2-hydroxypropyl methacrylate and 3-hydroxy-propyl methacrylate (HPMA isomers), a blend in weight ratio, for example, in a range of from 85/15 to 60/40, respectively.

The hydroxy alkyl acrylamide co-monomer of structural formula II and/or III may be hydroxymethyl methacrylamide, 2-hydroxyethyl methacrylamide, 2-hydroxypropyl methacryloamide and 3-hydroxypropyl methacrylamide, 3-phenoxy-2-hydroxy-2-hydroxypropyl methacrylamide, hydroxybutyl methacrylamide, hydroxyhexyl methacrylamide, hydroxyoctyl methacrylamide and mixtures thereof.

The microstructure, namely the cis and trans structures, of the copolymer are considered herein to be somewhat typical for an emulsion polymerization derived styrene/butadiene copolymer elastomer.

Preferably, the copolymer elastomer is further characterized by a glass transition (Tg) in a range of 0°C to -65°C, with a range of from -50°C to -20°C being particularly preferred.

The copolymer may have a Mooney viscosity (M/L 1 +4 at 100°C) that varies. Suitable copolymers have a Mooney viscosity as low as 20 to as high as 91. Preferably, the Mooney viscosity ranges from 50 to 90.

The aforesaid copolymer elastomer can be synthesized, for example, by using conventional elastomer emulsion polymerization methods. For example, a charge composition comprising water, one or more conjugated diolefin monomers, (e.g. 1,3-butadiene), one or more vinyl aromatic monomers (e.g. styrene) and the HPMA, a suitable polymerization initiator and emulsifier (soap). The copolymerization may be conducted over a relatively wide temperature range such as for example, from about 4°C to as high as 60°C, although a temperature in a range of 4°C to 10°C may be more desirable.

The emulsifiers may be added at the onset of the polymerization or may be added incrementally, or proportionally as the reaction proceeds. Anionic, cationic or nonionic emulsifiers may be employed.

In addition to the copolymer, the rubber or rubber component may contain one or more additional conjugated diene-based elastomers. When used, the additional rubber or rubbers generally range from 0 to 80 phr of the total rubber used. Preferably, the additional rubber will range from 10 to 50 phr with 90 to 50 phr being the total of the copolymer.

Representative of various additional conjugated diene-based elastomers for use in this invention include, for example, cis 1,4-polyisoprene rubber (natural or synthetic), cis 1,4-polybutadiene, high vinyl polybutadiene having a vinyl 1,2 content in a range of 30 to 90 percent, styrene/butadiene copolymers (SBR) including emulsion polymerization prepared SBR and organic solvent polymerization prepared SBR, styrene/isoprene/butadiene copolymers, isoprene/butadiene copolymers and isoprene/styrene copolymers.

The apex of the tire of the present invention contains from 2.1 to 35 phr of the reaction product of a methylene acceptor and a methylene donor. Preferably, from 5 to 20 phr, more preferably from 7 to 15 phr of the reaction product is used.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof. Examples of methylene acceptors include those disclosed in US-B-6,605,670; US-B- 6,541,551; US-B- 6,472,457; US-B- 5,945,500; US-B-5,936,056; US-B- 5,688,871; US-B- 5,665,799; US-B-5,504,127; US-B-5,405,897; US-B- 5,244,725; US-B- 5,206,289; US-B- 5,194,513; US-B-5,030,692; US-B- 4,889,481; US-B- 4,605,696; US-B- 4,436,853; and US-B-4,092,455. Examples of modified phenol novolak resins include cashew nut oil modified phenol novolak resin, tall oil modified phenol novolak resin and alkyl modified phenol novolak resin. In one embodiment, the methylene acceptor is a reactive phenol-formaldehyde resin. Suitable reactive phenol-formaldehyde resins include SMD 30207 from Schenectedy Chemicals.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber stock may vary. In one embodiment, the amount of methylene acceptor ranges from 2 to 25 phr. In another embodiment, the amount of methylene acceptor ranges from 5 to 20 phr.

In-situ resins are formed in the rubber stock and involve the reaction of a methylene acceptor and a methylene donor. The term "methylene donor" is also intended to mean a compound capable of reacting with the methylene acceptor and generate the resin in-situ. Examples of methylene donors which are suitable for use in the present invention include hexamethylenetetramine, hexamethoxymethylmelamine, hexaethoxymethylmelamine, imino-methoxymethylmelamine, imino-isobutoxymethylmelamine, lauryloxymethylpyridinium chloride, ethoxymethylpyridinium chloride trioxan and hexamethoxymethylmelamine. In addition, the methylene donors may be N-substituted oxymethylmelamines, of the general formula: 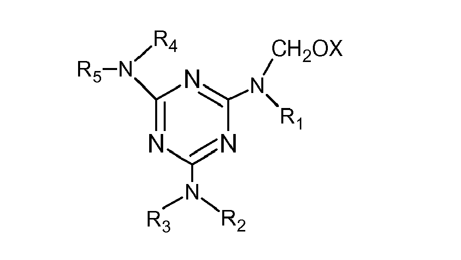 wherein X is hydrogen or an alkyl having from 1 to 8 carbon atoms, R_{1'} R₂, R₃, R₄ and R₅ are individually selected from the group consisting of hydrogen, an alkyl having from 1 to 8 carbon atoms, the group -CH2OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N'N"-tributyl-N,N',N"-trimethylol-melamine. The N-methylol derivatives of melamine are prepared by known methods.

The amount of methylene donor that is present in the rubber stock may vary. Typically, the amount of methylene donor that is present will range from 0.1 phr to 10 phr. Preferably, the amount of methylene donor ranges from 0.2 phr to 4 phr.

The weight ratio of the methylene acceptor to methylene donor may vary. Generally speaking, the weight ratio ranges from 0.5:1 to 25:1. Preferably, the range is from 2:1 to 20:1.

The rubber composition may further comprise rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene copolymers, also known as ethylene/propylene/diene monomer (EPDM), and in particular, ethylene/propylene/ dicyclopentadiene copolymers. Additional examples of rubbers which may be used include alkoxysilyl end functionalized solution polymerized polymers (SBR, PBR, IBR and SIBR), silicon-coupled and tin-coupled star-branched polymers. The preferred rubber or elastomers are polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a copolymer rubber, as E-SBAR, in amounts, for example, of 2 to 30 weight percent bound acrylonitrile in the copolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Commonly employed carbon blacks can be used as a filler. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. Carbon black may be used in an amount ranging from 10 to 150 phr.

In one embodiment the rubber composition may contain a conventional sulfur containing organosilicon compound. Examples of suitable sulfur containing organosilicon compounds are of the formula:

Z-Alk-Sn-Alk-Z IV

in which Z is selected from the group consisting of 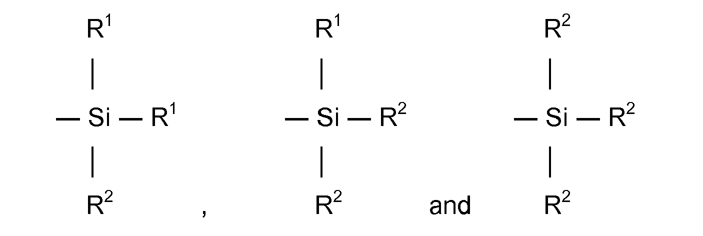 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula IV, Z may be 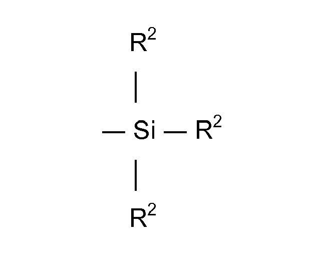 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from GE Silicones.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. A representative antioxidant may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator are used with the secondary accelerator being used in smaller amounts, such as from 0.05 to 3 phr. In one embodiment, the primary accelerator is a sulfenamide. If a second accelerator is used, the secondary accelerator may be a guanidine, dithiocarbamate or thiuram compound.

The ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The thermomechanical working may be from 1 to 20 minutes.

The pneumatic tire of the present invention may be a race tire, passenger tire, aircraft tire, agricultural, earthmover, off-the-road, truck tire, and the like. In a preferred embodiment, the tire is a passenger or truck tire. The tire may also be a radial or bias.

Vulcanization of the pneumatic tire of the present invention is generally carried out at conventional temperatures ranging from about 100°C to 200°C.

The invention is further illustrated by the following example.

### Example 1

In this Example, a rubber composition for use in the tire of the present invention is illustrated.

Rubber compositions containing the materials set out in Table 1 was prepared using multiple stages of addition (mixing); at least one non-productive mix stage and a productive mix stage. The non-productive stages were discharged at a rubber temperature of 160°C. The drop temperature for the productive mix stage was 115°C.

The rubber compositions are identified as Sample 1 through Sample 8. The Samples were cured at 165°C for 10 minutes. Table 2 illustrates the physical properties of the cured Samples 1 through 8. Samples were tested according to the following protocols:
MDR 2000 : ASTM D2084 , D5289
Green Strength: ASTM 6746-03
Tensile Test for Rubber: D412

**Table 1**

| ***Non-Productive*** | |
|---|---|
| Elastomer¹ | 100 |
| Carbon black | 50 |
| Processing oil | 7 |
| Tackifying resin² | 2 |
| Fatty acid | 2 |
| Zinc oxide | 5 |
| Silane polysulfide³ | Varied |
| Methylene acceptor⁴ | Varied |

| ***Productive*** | |
|---|---|
| Retarder⁵ | 0.1 |
| Accelerator⁶ | 2 |
| Sulfur⁷ | 3.75 |
| Methylene donor⁸ | Varied |

| | |
|---|---|
| ¹ Natural Rubber or SBR-HPMA, as in Table 2 ² alkyl phenol formaldeyde novlak tackifying resin as SP 1068 from Schenectady Chemicals ³ bis(triethoxysilylpropyl) tetrasulfide, SI69 50 wt % on carbon black carrier ⁴ reactive phenol formaldehyde resin as SMD 30207 from Schenectady Chemicals ⁵ N-cyclohexylthiophthalimide ⁶ sulfenamide type ⁷ insoluble sulfur, 20% oil treated ⁸ hexamethylenetetramine | |

**Table 2**

| Sample No. | 1 | 2 | 3 | 4 | 5 | 6 | 7 | 8 |
|---|---|---|---|---|---|---|---|---|
| *Elastomer* | | | | | | | | |
| Natural Rubber | 100 | 0 | 100 | 0 | 100 | 0 | 100 | 0 |
| SBR-HPMA⁹ | 0 | 100 | 0 | 100 | 0 | 100 | 0 | 100 |
| Methylene acceptor | 20 | 20 | 10 | 10 | 10 | 10 | 5 | 5 |
| Methylene donor | 3 | 3 | 1.5 | 1.5 | 1.5 | 1.5 | 0.75 | 0.75 |
| Silane polysulfide | 0 | 0 | 0 | 0 | 1.5 | 1.5 | 1.5 | 1.5 |

| | | | | | | | | |
|---|---|---|---|---|---|---|---|---|
| ⁹ Styrene/butadiene/HPMA copolymer elastomer, non-oil extended, prepared by aqueous emulsion polymerization from The Goodyear Tire & Rubber Company with the following properties: Mooney ML/4 viscosity at 100°C of about 57; hydroxypropyl methacrylate (HPMA) of about three weight percent glass transition temperature (Tg) of about -34°C at a DSC (scanning calorimeter) mid-point. The HPMA was a blend of a 2-hydroxypropyl methacrylate isomers in a weight ratio of about 80/20, respectively, as obtained from the Aldrich Chemical Company. | | | | | | | | |

**Table 3**

| Sample No. | 1 | 2 | 3 | 4 | 5 | 6 | 7 | 8 |
|---|---|---|---|---|---|---|---|---|
| ***Compression Set (Cured 10 Min at 165 °C)*** | | | | | | | | |
| % Set at 70 °C | 46.8 | 44.0 | 43.5 | 43.1 | 43.4 | 42.2 | 42.1 | 38.9 |

| ***Hardness (Cured 10 Min at 165 °C)*** | | | | | | | | |
|---|---|---|---|---|---|---|---|---|
| Shore D | 49 | 50 | 40 | 44 | 42 | 45 | 36 | 39 |

| ***Tensile Properties*** | | | | | | | | |
|---|---|---|---|---|---|---|---|---|
| 100% Modulus, MPa | 7.7 | 9.4 | 6.8 | 7.8 | 6.6 | 8.5 | 5.7 | 7.5 |
| 200% Modulus, MPa | 12.6 | 15.3 | 13.0 | 16.2 | 13.0 | 17.3 | 12.7 | 17.8 |
| Tensile Strength, MPa | 15.4 | 16.0 | 19.0 | 20.6 | 18.7 | 20.4 | 20.9 | 23.0 |

| ***Green Strength*** | | | | | | | | |
|---|---|---|---|---|---|---|---|---|
| Elong At Break, % | 1345 | 1778 | 1323 | 1437 | 1407 | 942 | 1524 | 2667 |
| 10% Modulus, MPa | 0.20 | 0.73 | 0.20 | 0.60 | 0.23 | 0.73 | 0.20 | 0.57 |

| ***MDR, 150 °C*** | | | | | | | | |
|---|---|---|---|---|---|---|---|---|
| Min Torque, dNm | 2.8 | 2.7 | 3.5 | 3.4 | 3.3 | 3.2 | 3.3 | 3.3 |
| Max Torque, dNm | 74.8 | 69.4 | 63.1 | 58.1 | 63.6 | 58.8 | 49.6 | 45.3 |
| T+1, minutes | 1.3 | 1.9 | 1.3 | 1.9 | 1.5 | 2.1 | 1.9 | 2.7 |
| T+2, minutes | 1.8 | 2.6 | 2 | 3.2 | 2.2 | 3.3 | 2.8 | 5.3 |
| T25, minutes | 4.7 | 7.8 | 5.2 | 9.6 | 5.3 | 8.9 | 5.6 | 10.4 |
| T50, minutes | 7.6 | 11.9 | 7.8 | 13.4 | 7.9 | 12.5 | 8 | 14 |
| T90, minutes | 17.5 | 27.8 | 16.1 | 28.3 | 16.5 | 27.5 | 15.9 | 27.6 |
| Time to max T, minutes | 30.5 | 59.9 | 28.1 | 59.5 | 29.3 | 59.4 | 28.1 | 59.1 |

As seen in Table 3, the samples containing the copolymer showing significantly improved properties, including higher Shore hardness, reduced compression set, increased modulus and tensile strength, as compared with the natural rubber containing controls. In particular, the green strength of the inventive samples was significantly higher than the controls, indicating better processing ability for the apex.

The benefit of using silane in combination with the copolymer is apparent when considering the relative property changes when comparing sample 6 to sample 5 (with silane) and sample 4 to sample 3 (no silane). As can be seen, the cured 100% and 200% modulus and green 10% modulus is further increased through the use of the silane.

## Claims

1. A pneumatic tire having an apex, the apex comprising
(A) a copolymer rubber comprising repeat units derived from
(1) 10 to 99 weight percent of a conjugated diene monomer which contains from 4 to 8 carbon atoms;
(2) 0 to 70 weight percent of a vinyl substituted aromatic monomer; and
(3) 1 to 20 weight percent of at least one co-monomer selected from the group consisting of the following general formulas I, II, and III: 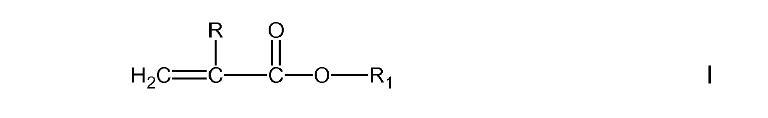 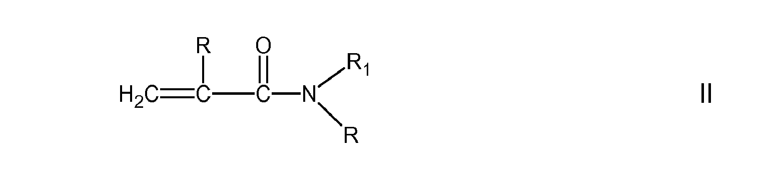 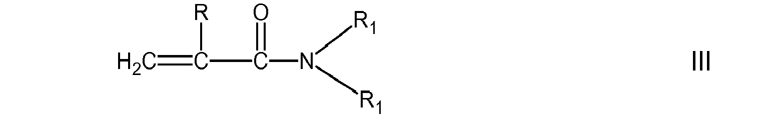
wherein R represents a hydrogen atom or an alkyl group containing from 1 to 8 carbon atoms;
wherein R₁ represents a saturated alcohol group containing from 1 to 8 carbon atoms; and
(B) from 2.1 to 35 phr of the reaction product of
(1) 2 to 25 phr of a methylene acceptor; and
(2) 0.1 to 10 phr of a methylene donor selected from the group consisting of hexaethoxymethylmelamine, hexamethylenetetramine, hexamethoxymethylmelamine, imino-methoxymethylmelamine, imino-isobutoxymethylmelamine, lauryloxymethylpyridinium chloride, ethoxymethylpyridinium chloride, trioxan hexamethoxymethylmelamine and N-substituted oxymethyl melamines of the formula: 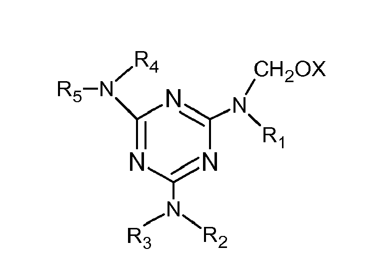
wherein X is hydrogen or an alkyl having from 1 to 8 carbon atoms, R₁, R₂, R₃, R₄ and R₅ are individually selected from the group consisting of hydrogen, an alkyl having from 1 to 8 carbon atoms, the group -CH₂OX and their condensation products.

2. The tire of claim 1 wherein said co-monomer is of formula I.

3. The tire of claim 1 or 2 wherein said conjugated diene monomer is selected from the group consisting of 1,3-butadiene, isoprene, 1,3-ethylbutadiene, 1,3-pentadiene, 1,3-hexadiene, 1,3-cyclooctadiene, 1,3-octadiene and mixtures thereof.

4. The tire of at least one of the previous claims wherein said vinyl substituted aromatic monomer is selected from the group consisting of styrene, alpha methyl styrene, vinyl toluene, 3-methyl styrene, 4-methyl styrene, 1-cyclohexylstyrene, 4-para-tolylstyrene, para-chlorostyrene, 4-tert-butyl styrene, 1-vinylnapthalene, 2-vinylnaphthalene and mixtures thereof.

5. The tire of at least one of the previous claims wherein the methylene acceptor is selected from unmodified phenol novolak resins, modified phenol novolak resins, reactive phenol formaldehyde resins, and resorcinol novolak resins.

6. The tire of at least one of the previous claims wherein the methylene acceptor is a reactive phenol formaldehyde resin.

7. The tire of at least one of the previous claims wherein the methylene donor is hexamethylenetetramine.

8. The tire of at least one of the previous claims wherein the apex further comprises from 0.5 to 20 phr of sulfur containing organosilicon compounds are of the formula:
Z-Alk-Sₙ-Alk-Z
in which Z is selected from the group consisting of 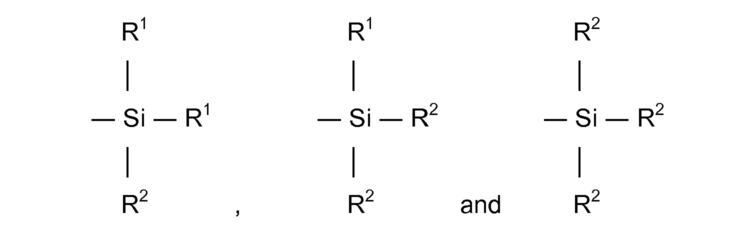 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

9. The tire of at least one of the previous claims wherein the apex further comprises from 10 to 150 phr of carbon black.

10. The tire of at least one of the previous claims wherein the copolymer rubber comprises repeat units derived from
(1) 50 to 80 weight percent of a conjugated diene monomer which contains from 4 to 8 carbon atoms;
(2) 20 to 40 weight percent of a vinyl substituted aromatic monomer; and
(3) 1 to 5 weight percent of at least one co-monomer selected from the group consisting of formulas I, II, and III.
